# EUROPEAN PATENT APPLICATION

(11) **EP 4 708 421 A1**
(43) Date of publication of application: **11.03.2026**
(21) Application number: 25192518.6
(22) Date of filing: 29.07.2025
(51) Int. Cl.: H01M 10/04, H01M 10/0587, H01M 50/107, H01M 50/593, H01M 50/595, H01M 50/486, H01M 50/489, H01M 50/474

(54) **SECONDARY BATTERY, BATTERY MODULE AND ELECTRONIC APPARATUS**

(30) Priority: 30.08.2024 CN 202422137855 U
(71) Applicant: AESC Japan Ltd., Yokohama-Shi, Kanagawa 220-0012 (JP)
(72) Inventor: GUO, Xueqin, Jiangyin City, Wuxi City, 214443 (CN)
(74) Representative: Becker, Eberhard

(57) **Abstract**

A secondary battery (100), a battery module (10), and an electronic apparatus (1) are provided. The secondary battery (100) includes a casing (110) and an electrode assembly (120). The casing (110) includes an end wall (111) and a side wall (112) surrounding the end wall (111), and an axis of the casing (110) is a first axis (114). The electrode assembly (120) accommodated in the casing (110) includes a positive terminal sheet (121), a negative terminal sheet (123), and a separator (122) stacked and wound to form a wound structure (126). A number of turns of the negative terminal sheet (123) is greater than 40 turns, and an axis of the wound structure (126) is a second axis (1261).

## Description

### BACKGROUND

### Technical Field

The disclosure relates to the technical field of batteries, and in particular, relates to a secondary battery, a battery module, and an electronic apparatus.

### Description of Related Art

In the related art, generally, a large cylindrical battery uses a structure where the electrode assembly is assembled with a steel casing. In this structure, the casing is encapsulated to isolate the external environment, so that the electrochemical reaction of the inner active materials is protected. Further, the side wall of the casing has a significant constraining effect on the radial swelling of the electrode assembly. In a large cylindrical battery, as the number of turns of terminal sheets in winding increases, the radial swelling of the electrode assembly also increases accordingly. Through testing, it has been found that in the same batch of large cylindrical batteries, some have the problem of electrolyte being squeezed out from between the terminal sheets in the later stages of the cycle. As a result, lithium deposition occurs in local poor fluid, which causes a sharp deterioration in the performance of cylindrical batteries and poses a major safety hazard.

### SUMMARY

In view of the abovementioned shortcomings of the related art, the disclosure provides a secondary battery, a battery module, and an electronic apparatus capable of improving the technical problem of battery performance deterioration caused by lithium deposition occurring in local poor fluid in an electrode assembly.

The disclosure provides a secondary battery, a battery module, and an electronic apparatus. The secondary battery includes a casing and an electrode assembly. The casing includes an end wall and a side wall surrounding the end wall, and an axis of the casing is a first axis. The electrode assembly is accommodated in the casing and includes a positive terminal sheet, a negative terminal sheet, and a separator stacked and wound to form a wound structure. The number of turns of the negative terminal sheet is greater than 40 turns, and an axis of the wound structure is a second axis. When a state of charge (SOC) of the secondary battery is less than 5%, the second axis is located in a cylindrical region with the first axis as the axis and a diameter d1 of φ0.6mm.

In the above technical solution, considering that the number of turns of the terminal sheet in a large cylindrical battery is usually greater than 40 turns, the increase in the number of turns causes the accumulated swelling of the electrode assembly to increase accordingly. When the electrode assembly is eccentric to one side of the casing, the effect of uneven stress from the casing on the electrode assembly becomes more obvious. By limiting the SOC of the secondary battery to be less than 5% and the second axis to be located in a cylindrical region with the first axis as the axis and a diameter d1 of φ0.6mm, the coaxiality of the electrode assembly and the casing is increased, a more uniform safety slit is provided between the electrode assembly and the inner wall of the casing, the problem of uneven stress on the electrode assembly from the casing during charging and pre-charging process of the battery is improved, the problem of lithium deposition occurring in local poor fluid is improved, and the effect of enhancing safety performance is achieved.

In the secondary battery provided by an embodiment of the disclosure, the electrode assembly further includes a finishing adhesive wound around an outer periphery of a wound structure for more than one turn. In a winding direction of the wound structure, a terminating end of the finishing adhesive passes over a starting end of the finishing adhesive and forms an overlapping portion. A distance between the overlapping portion and the side wall is greater than or equal to 0.2mm.

In the above technical solution, in order to better fix the wound structure, the finishing adhesive is wound around the outer periphery of the wound structure. A terminating end of the finishing adhesive passes over a starting end of the finishing adhesive and forms an overlapping portion. A radial size at the position of the overlapping portion is larger, so a distance between the overlapping portion and the side wall is limited to be greater than or equal to 0.2mm. In this way, a safety slit is provided between the overlapping portion and the side wall, so that when the battery swells during charging, the problem of local lithium deposition caused by the electrolyte being squeezed out when the overlapping portion easily compresses against the side wall 112 eased.

In the secondary battery provided by an embodiment of the disclosure, the secondary battery further includes an electrode terminal, a first current-collecting member, and an adhesive-covering layer. The electrode terminal passes through the end wall and is insulated from the end wall. An end portion of the positive terminal sheet includes a positive tab bent toward the second axis. One side of the first current-collecting member is fixedly connected to the electrode terminal, and the other side of the first current-collecting member is fixedly connected to the positive tab. The adhesive-covering layer at least isolates the positive tab and the casing and includes a first covering portion and a second covering portion connected to the first covering portion. The first covering portion covers an edge of a first current-collecting member. The second covering portion covers an outer periphery of one end of the electrode assembly close to the first current-collecting member and includes a compressible elastic layer. A thickness b of the second covering portion is in a range of b≤0.2mm.

In the above technical solution, in order to provide insulation and isolation between the exposed tab near the outer side of the wound structure and the casing, the adhesive-covering layer is arranged at an edge of the first current-collecting member and at an end of the electrode assembly near the first current-collecting member. On the one hand, the adhesive-covering layer may isolate the positive tab and the casing, and on the other hand, wrap the exposed positive tab to protect the positive tab, so the risk of the positive tab breaking and falling into the inner portion of the battery and causing a short circuit is lowered. Further, the second covering portion includes the compressible elastic layer, and the thickness b of the second covering portion is in the range of b≤0.2mm. On the one hand, the second covering portion with a certain thickness serves as a pre-guide when the electrode assembly is placed into the casing, so that at least a slit of the thickness of the second covering portion is provided between the electrode assembly and the side wall. The coaxiality of the electrode assembly and the casing is increased, the problem of uneven stress on the electrode assembly from the casing due to the electrode assembly being eccentric to one side of the casing is improved, the problem of lithium deposition occurring in local poor fluid is improved, and the effect of enhancing safety performance is achieved. Additionally, the second covering portion has compressible performance, so its thickness when the battery swells is reduced, and the effect of stress concentration is achieved.

In the secondary battery provided by an embodiment of the disclosure, the first covering portion also includes an elastic layer integrally formed with the second covering portion. The adhesive-covering layer further includes a first adhesive layer that adhesively fixes the elastic layer to the electrode assembly and the first current-collecting member.

In the above technical solution, the first covering portion and the second covering portion 1292 form an integral structure, so that the process of packaging the adhesive-covering layer is simplified, and processing efficiency is thus improved.

In the secondary battery provided by an embodiment of the disclosure, the second covering portion includes a base layer integrally formed with the first covering portion, the elastic layer, and a second adhesive layer adhering the base layer to the elastic layer.

In the above technical solution, the elastic layer is only arranged in the second covering portion, and with this arrangement, improved coaxiality between the electrode assembly and the casing is achieved while lower material costs are needed.

In the secondary battery provided by an embodiment of the disclosure, an end portion of the positive terminal sheet includes a positive tab extending out of the separator along the second axis in a direction toward the end wall and bent toward the second axis. The secondary battery further includes insulating plastic at least isolating the positive tab and the casing. The insulating plastic includes a first insulator and a second insulator. The first insulator is located between the positive tab and the end wall, and the second insulator is located between the side wall and the electrode assembly.

In the above technical solution, the insulating plastic exhibits the effect of isolating and insulating the positive tab and the casing. The first insulator is mainly used to isolate the positive tab and the end wall, and the second insulator is mainly used to isolate the exposed positive tab and the side wall. Further, the second insulator also functions as a limiter between the electrode assembly and the side wall, so that at least a slit of a thickness of the second insulator is provided between the electrode assembly and the side wall. The coaxiality of the electrode assembly and the casing is increased, the problem of uneven stress on the electrode assembly from the casing due to the electrode assembly being eccentric to one side of the casing is improved, the problem of lithium deposition occurring in local poor fluid is improved, and the effect of enhancing safety performance is achieved.

In the secondary battery provided by an embodiment of the disclosure, a chamfer is arranged on an inner wall of one end of the second insulator away from the first insulator.

In the above technical solution, pre-guiding is provided when the electrode assembly is placed into the casing, so assembly efficiency is improved, and a contact area between the electrode assembly and the second insulator is also reduced, which is beneficial for heat dissipation.

In the secondary battery provided by an embodiment of the disclosure, a third adhesive layer is arranged on an outer side of the second insulator to adhesively fix the second insulator and the side wall.

In the above technical solution, the third adhesive layer is used to adhesively fix the second insulator and the side wall, so a slit is prevented from being provided between the second insulator and the side wall, and the second insulator is prevented from interfering with the electrode assembly when it is placed into the casing. Through this arrangement, the placement of the electrode assembly into the casing can be easily performed, and the effect of assembly efficiency and assembly quality enhancement is achieved.

In the secondary battery provided by an embodiment of the disclosure, an end portion of the negative terminal sheet includes a negative tab extending out of the separator along the second axis in a direction away from the end wall and bent toward the second axis. The secondary battery further includes a second current-collecting member including a current-collecting body and a casing-connecting portion arranged at an outer periphery of the current-collecting body. The current-collecting body is fixedly connected to the negative tab, and the casing-connecting portion is fixedly connected to the side wall. A radius of an outer edge of the casing-connecting portion is greater than a radius of the electrode assembly. An axis of the second current-collecting member is a third axis located within a cylindrical region with the second axis as the axis and a diameter d2 of φ0.2mm.

In the above technical solution, since after the casing-connecting portion and the casing are welded, the second current-collecting member provides a certain limiting effect for the electrode assembly, the third axis is limited to be located within a cylindrical region with the second axis as the axis and a diameter d2 of φ0.2mm. On the one hand, the coaxiality of the electrode assembly and the second current-collecting member is improved, so that the coaxiality of the electrode assembly and the casing improved. On the other hand, a safety slit is ensured to be provided between the motor assembly and the side wall, the problem of uneven stress on the electrode assembly from the casing due to the electrode assembly being eccentric to one side of the casing is improved, the problem of lithium deposition occurring in local poor fluid is improved, and the effect of enhancing safety performance is achieved.

The disclosure further provides a battery module, and the battery module includes the secondary battery according to any one of the above.

The disclosure further provides an electronic apparatus, and the electronic apparatus includes the aforementioned battery module.

In the secondary battery of the disclosure, the axis of the casing is the first axis, and the axis of the wound structure in the electrode assembly is the second axis. Considering that the results obtained when detecting and testing is performed in the swelled state of the secondary battery during charging are inaccurate, the SOC of the secondary battery is limited to be less than 5% and the second axis is limited to be located in a cylindrical region with the first axis as the axis and a diameter d1 of cp0.6mm. The coaxiality of the electrode assembly and the casing is increased, a more uniform safety slit is provided between the electrode assembly and the inner wall of the casing, the problem of uneven stress on the electrode assembly from the casing during charging and pre-charging process of the battery is improved, the problem of lithium deposition occurring in local poor fluid is improved, and the effect of enhancing safety performance is achieved.

### BRIEF DESCRIPTION OF THE DRAWINGS

To make the technical solutions provided in the embodiments of the disclosure or the related art more clearly illustrated, several accompanying drawings required by the embodiments or the related art for description are briefly introduced as follows. Obviously, the drawings in the following description are merely some embodiments of the disclosure, and for a person having ordinary skill in the art, other embodiments can be obtained based on these drawings without inventive effort.
FIG. 1 is a schematic view of an overall structure of a secondary battery according to an embodiment of the disclosure.
FIG. 2 is a schematic view of a structure of an electrode assembly of the secondary battery according to an embodiment of the disclosure.
FIG. 3 is a cross-sectional of the secondary battery according to an embodiment of the disclosure.
FIG. 4 is a cross-sectional of the secondary battery according to an embodiment of the disclosure.
FIG. 5 is a local enlargement view of a region A in FIG. 1.
FIG. 6 is a local enlargement view of a region B in FIG. 5.
FIG. 7 is a schematic view of the overall structure of the secondary battery according to an embodiment of the disclosure.
FIG. 8 is a local enlargement view of a region C in FIG. 7.
FIG. 9 is a local enlargement view of a region D in FIG. 8.
FIG. 10 is a schematic view of the overall structure of the secondary battery according to an embodiment of the disclosure.
FIG. 11 is a local enlargement view of a region E in FIG. 10.
FIG. 12 is a local enlargement view of a region F in FIG. 11.
FIG. 13 is a cross-sectional of the secondary battery according to an embodiment of the disclosure.
FIG. 14 is a schematic view of a battery module according to an embodiment of the disclosure.
FIG. 15 is a schematic view of an electronic apparatus according to an embodiment of the disclosure.

Description of reference numerals of the elements:
1: electronic apparatus, 10: battery module, 11: working portion, 101: box, 102: box cover, 100: secondary battery, 110: casing, 111: end wall, 112: side wall, 113: opening, 114: first axis, 120: electrode assembly, 121: positive terminal sheet, 1211: positive current collector, 1212: first coated region, 1213: first uncoated region, 122: separator, 123: negative terminal sheet, 1231: negative current collector, 1232: second coated region, 1233: second uncoated region, 124: negative tab, 125: positive tab, 126: wound structure, 1261: second axis, 127: winding hole, 128: finishing adhesive, 1281: starting end, 1282: terminating end, 1283: overlapping portion, 129: adhesive-covering layer, 1291: first covering portion, 1292: second covering portion, 1293: elastic layer, 1294: first adhesive layer, 1295: base layer, 1296: second adhesive layer, 130: cover plate, 140: electrode terminal, 150: first current-collecting member, 160: second current-collecting member, 161: current-collecting body, 162: casing-connecting portion, 163: third axis, 170: insulating plastic, 171: first insulator, 172: second insulator, 173: chamfer, and 174: third adhesive layer.

### DESCRIPTION OF THE EMBODIMENTS

The implementation of the disclosure is illustrated below by specific embodiments. A person having ordinary skill in the art can easily understand other advantages and effects of the disclosure from the content disclosed in this specification. The disclosure can also be implemented or applied through other different specific implementation ways. The details in this specification can also be modified or changed based on different viewpoints and applications without departing from the spirit of the disclosure. Note that the following embodiments and the features in the embodiments may be combined with each other in the case of no conflict. It should also be understood that the terminology used in the embodiments of the disclosure is for describing a specific implementation, but not for limiting the protection scope of the disclosure. The test methods for which specific conditions are not indicated in the following embodiments are usually in accordance with conventional conditions or in accordance with the conditions suggested by each manufacturer.

When the numerical ranges are given in the embodiments, it should be understood that, unless otherwise stated in the disclosure, the two endpoints of each numerical range and any numerical value between the two endpoints may be selected. Unless otherwise defined, all technical and scientific terms used in the disclosure are consistent with the grasp of the prior art by a person having ordinary skill in the art and the content of the disclosure. Any method, device, and material in the prior art similar or equivalent to the methods, devices, and materials described in the embodiments of the disclosure may also be used to implement the disclosure.

It should be noted that terms such as "upper", "lower", "left", "right", "middle" and "one" quoted in this specification are only for the convenience of description and are not used to limit the applicable scope of the disclosure. The change or adjustment of its relative relationship should also be regarded as the applicable scope of the disclosure without substantive change of the technical content.

A secondary battery includes an electrode assembly. The electrode assembly is the component in the secondary battery where electrochemical reactions occur, and one or more terminal assemblies may be included.

The secondary battery also includes a casing, a cover plate, and an electrode terminal. The casing includes an end wall and a side wall surrounding the end wall, and one end of the side wall has an opening. The electrode assembly may be assembled into the casing via the opening of the casing. The cover plate is used to cover the opening of the casing for sealing. The electrode terminal passes through the end wall and is electrically connected to the electrode assembly to conduct the electrical energy generated by the electrode assembly out of the battery.

In the related art, generally, a secondary battery uses a structure where the electrode assembly is assembled with a steel casing. In this structure, the casing is encapsulated to isolate the external environment, so that the electrochemical reaction of the inner active materials is protected. Further, the side wall of the casing has a significant constraining effect on the radial swelling of the electrode assembly. With the demand for battery performance grows, the number of turns of the terminal sheet in a large cylindrical battery is usually greater than 40 turns. The increase in the number of turns causes the accumulated swelling of the electrode assembly to increase accordingly. Further, a silicon-based negative terminal with higher energy storage capacity is adopted most of the time for a secondary battery. However, the silicon-based negative terminal undergoes more significant volume swelling during the charge and discharge process. The inventor has found that when the electrode assembly is eccentric to one side of the casing, the effect of uneven stress from the casing on the electrode assembly becomes more obvious. The side that is eccentric to the casing bears greater force, and in the later stages of cycling, the electrolyte between the terminal sheets is squeezed out. As a result, lithium deposition occurs in local poor fluid, which causes a sharp deterioration in the performance of the cylindrical battery and poses a major safety hazard.

In view of the above, the disclosure provides a technical solution in which the second axis is limited within a cylindrical region with the first axis as its axis and a diameter d1 of φ0.6mm. In this setting, the coaxiality of the electrode assembly and the casing is increased, the problem of uneven stress on the electrode assembly from the casing due to the electrode assembly being eccentric to one side of the casing is improved, the problem of lithium deposition occurring in local poor fluid is improved, and the effect of enhancing safety performance is achieved.

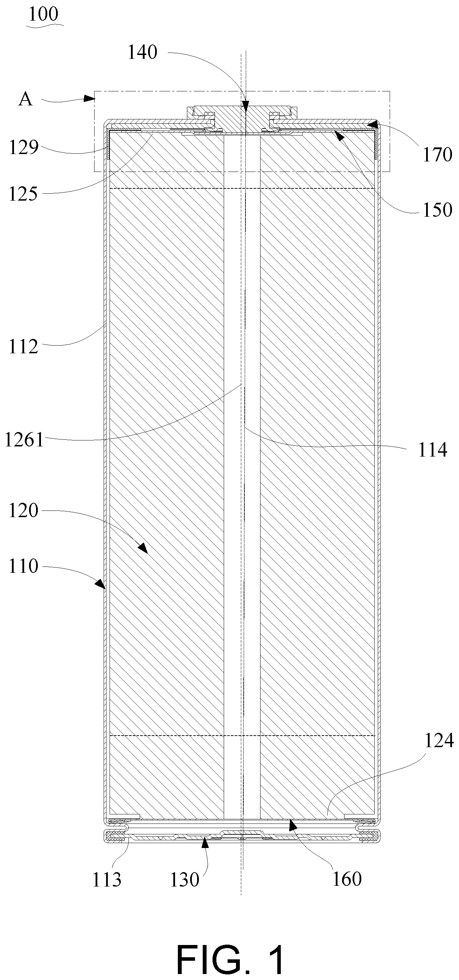

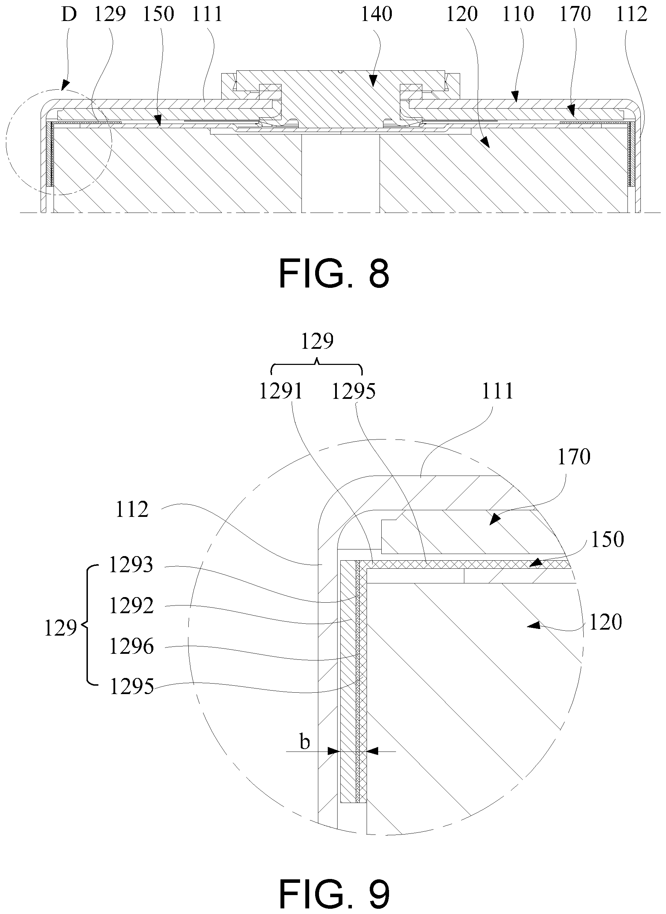

Referring to FIG. 1 to FIG. 15, the disclosure provides a secondary battery 100 including a casing 110, an electrode assembly 120, an electrode terminal 140, and a cover plate 130.

Referring to FIG. 1, the casing 110 includes an end wall 111 and a side wall 112 surrounding the end wall 111. As long as a stable sealing and electrical connection relationship can be formed, the connection between the end wall 111 and the side wall 112 may be achieved in a variety of ways, such as integral stamping, integral casting, or separate welding. The surrounding of the side wall 112 is not limited and may be in the form of a circular cylinder shape or a prismatic cylinder shape, or the side wall 112 may also surround the end wall 111 along any other closed loop contour that can match the end wall 111. An axis of the casing 110 is defined as a first axis 114. In the embodiment, an outer edge of the end wall 111 is circular, the side wall 112 surrounds the outer edge of the end wall 111 in a cylindrical shape, and a circular opening 113 is formed at an end of the side wall 112 away from the end wall 111. The casing 110 formed by the end wall 111 and the side wall 112 forms an accommodating cavity for accommodating the electrode assembly 120, electrolyte, and other necessary battery components. Specifically, a diameter of the casing 110 may be determined according to a specific size of the electrode assembly 120, such as 18mm, 21mm, 46mm, etc. The casing 110 can be made of various materials, such as copper, iron, aluminum, steel, aluminum alloy, etc. In order to prevent the casing 110 from rusting during long-term use, a surface of the casing 110 may also be plated with a layer of anti-rust material such as metal nickel.

With reference to FIG. 1 to FIG. 2, the electrode assembly 120 is received in an inner portion of the casing 110, and the electrode assembly 120 is a component in the secondary battery 100 where electrochemical reactions occur. One or a plurality of electrode assemblies 120 may be included within the casing 110. The electrode assembly 120 includes a positive terminal sheet 121, a negative terminal sheet 123, and a separator 122 that are stacked and wound around in an axial direction of the casing 110 to form a wound structure 126. A winding hole 127 is formed in a center of the wound structure 126, and an axis of the wound structure 126 is defined as a second axis 1261. It should be noted that in the method of determining the second axis 1261 of the wound structure 126, first, a CT or cross-section is made on the secondary battery 100, a line segment connecting radial ends of the electrode assembly 120 is made at positions near both ends of the electrode assembly 120, and then midpoints of the two line segments are connected. This connecting line is the second axis 1261 as shown in FIG. 1.

Referring to FIG. 1 to FIG. 2, the positive terminal sheet 121 includes a positive current collector 1211 and a positive active material layer coated on the positive current collector 1211. A first coated region 1212 coated with the positive active material layer and a first uncoated region 1213 without the positive active material layer are formed on the positive current collector 1211. The first coated region 1212 and the first uncoated region 1213 are arranged in the axial direction of the casing 110. The first uncoated region 1213 extends beyond the separator 122 towards one end in a height direction of the secondary battery 100 and is folded towards the second axis 1261 to form a stacked positive tab 125.

Referring to FIG. 1 to FIG. 2, the negative terminal sheet 123 includes a negative current collector 1231 and a negative active material layer coated on the negative current collector 1231. A second coated region 1232 coated with the negative active material layer and a second uncoated region 1233 without the negative active material layer are formed on the negative current collector 1231. The second coated region 1232 and the second uncoated region 1233 are arranged in the axial direction of the casing 110. The second uncoated region 1233 extends beyond the separator 122 towards the other end in the height direction of the secondary battery 100 and is folded towards the second axis 1261 to form a stacked negative tab 124.

Referring to FIG. 1 to FIG. 2, the separator 122 is arranged between the positive terminal sheet 121 and the negative terminal sheet 123 to isolate the positive active material layer from the negative active material layer. Taking a lithium-ion secondary battery 100 as an example, a material of the positive current collector 1211 may be aluminum, and the positive active material layer includes a positive active material, which may be lithium cobalt oxide, lithium iron phosphate, ternary lithium, or lithium manganese oxide, etc. A material of the negative current collector 1231 may be copper, and the negative active material layer includes a negative active material, which may be carbon or silicon, etc. A base material of the separator 122 may be polypropylene (abbreviated as PP) or polyethylene (abbreviated as PE), etc. In order to protect and insulate a cell, the cell may also be covered with an insulating film, and the insulating film may be made of, for example, PP, PE, polyethylene terephthalate (abbreviated as PET), polyvinyl chloride (abbreviated as PVC), or other polymer materials.

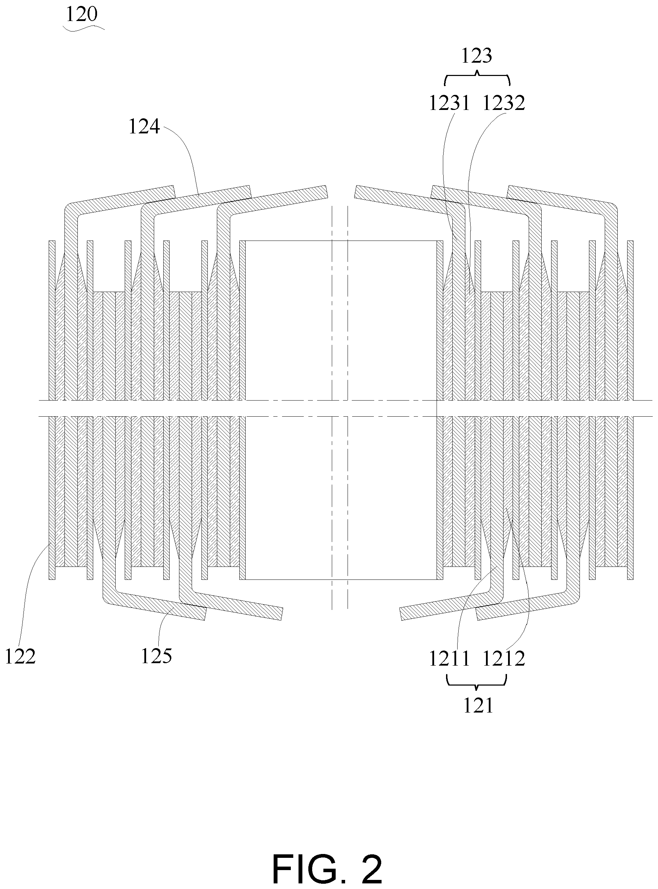

With reference to FIG.1 and FIG.2, further, in the disclosure, the positive tab 125 faces the end wall 111 or the opening 113, while the negative tab 124 faces the other end of the casing 110. In this embodiment, the positive tab 125 faces the end wall 111 and is electrically connected to the electrode terminal 140, making the electrode terminal 140 positively charged. The negative tab 124 faces the opening 113 and is electrically connected to the casing 110, making the casing 110 negatively charged. However, in other embodiments, the negative tab 124 may be connected to the electrode terminal 140, and the positive tab 125 may be connected to the casing 110.

Referring to FIG. 1, the cover plate 130 is sealingly installed at the opening 113. An outer edge shape of the cover plate 130 corresponds to a shape of the opening 113 and is connected to the side wall 112 to seal the opening 113. In a specific embodiment, a rolling groove that is concave toward the inner portion of the casing 110 is rolled on a region near an outer end of the side wall 112 of the casing 110. The rolling groove can limit displacement of the electrode assembly 120 in an axial direction. One side of the rolling groove surrounds the casing 110 to form an annular step, and the cover plate 130 is placed on this step. A sealing ring is arranged between the cover plate 130 and the side wall 112. An edge of the opening 113 is sealed by upsetting, so that the cover plate 130 presses tightly against the sealing ring, and a reliable connection is thus formed.

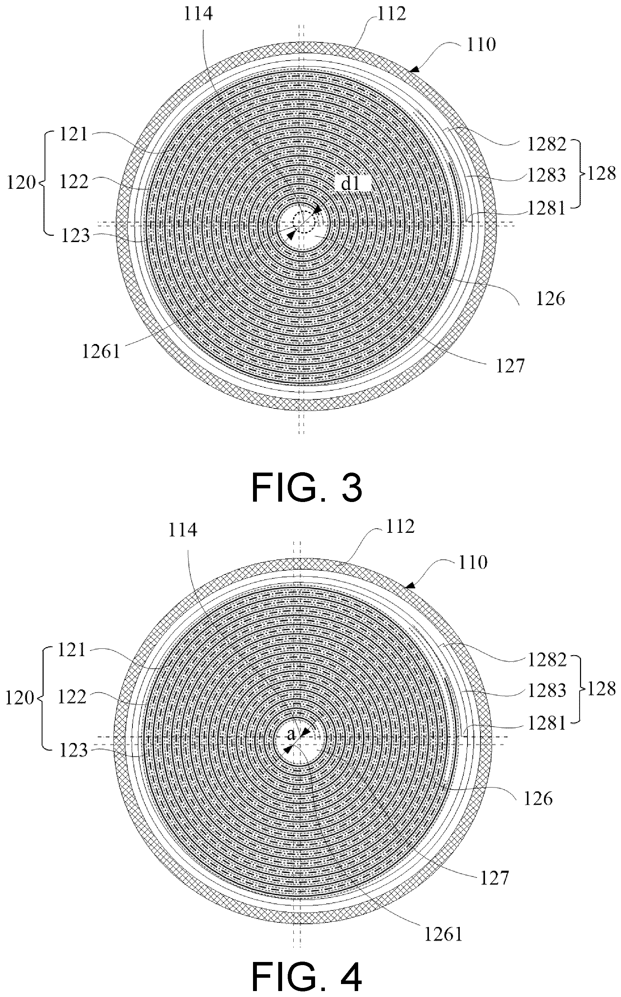

Considering that the number of turns of the negative terminal sheet 123 in the secondary battery 100 of the disclosure is usually greater than 40 turns, the increase in the number of turns causes the accumulated swelling of the electrode assembly 120 to increase accordingly. Additionally, at the current stage, the secondary battery 100 uses a silicon-based negative terminal with higher energy storage capability most of the time, but the silicon-based negative terminal undergoes more significant volume swelling during the charging and discharging process. When the electrode assembly 120 is eccentric to one side of the casing 110, the effect of uneven stress from the casing 110 on the electrode assembly 120 becomes more obvious. Further, please refer to FIG. 3, when a state of charge (SOC) of the secondary battery 100 is less than 5%, the second axis 1261 is located within a cylindrical region with the first axis 114 as the axis and a diameter d1 of φ0.6mm. In the setting of limiting the second axis 1261 to be located within a cylindrical region with the first axis 114 as the axis and a diameter d1 of φ0.6mm, the coaxiality of the electrode assembly 120 and the casing 110 is increased, the problem of uneven stress on the electrode assembly 120 from the casing 110 due to the electrode assembly 120 being eccentric to one side of the casing 110 is improved, the problem of lithium deposition occurring in local poor fluid is improved, and the effect of enhancing safety performance is achieved. It should be noted that since the positions of the second axis 1261 and the first axis 114 in this technical solution are both determined when the electrode assembly 120 is not swelled, in order to avoid obtaining inaccurate results when detecting and testing is performed in the swelled state of the secondary battery 100 during charging, the limitation is made when the secondary battery 100 is in a state of less than 5% SOC, that is, when a battery level of the secondary battery 100 is below 5%. Additionally, the determination of the number of turns of the negative terminal sheet 123 is obtained by performing CT or taking cross-sectional images of the electrode assembly 120 and then observing the number of turns of the negative terminal sheet 123.

Please refer to FIG. 4, in the secondary battery 100 provided by an embodiment of the disclosure, the electrode assembly 120 further includes a finishing adhesive 128 wound around an outer periphery of the wound structure 126 for more than one turn. A height of the finishing adhesive 128 in the axial direction of the electrode assembly 120 is not limited, and the finishing adhesive 128 may completely or partially cover the height of the wound structure 126. The finishing adhesive 128 may be in one section or a plurality of sections, with the plurality of sections of the finishing adhesive 128 arranged at intervals in the axial direction of the electrode assembly 120. Further, in the winding direction of the wound structure 126, a terminating end 1282 of the finishing adhesive 128 wraps past a starting end 1281 of the finishing adhesive 128, and an overlapping portion 1283 is thereby formed. In this arrangement, the starting end 1281 of the finishing adhesive 128 is allowed to be pressed by the terminating end 1282, so the fixing effect of the finishing adhesive 128 is enhanced. However, the overlapping portion 1283 increases a local radial thickness of the wound structure 126. Therefore, to mitigate the impact of the overlapping portion 1283 on the coaxiality of the electrode assembly 120 and the casing 110, a distance between the overlapping portion 1283 and the side wall 112 is greater than or equal to 0.2mm, for example, it may be 0.2mm, 0.22mm, 0.25mm, 0.27mm, 0.28mm, 0.3mm, 0.32mm, or 0.35mm, etc. In this way, a safety slit is provided between the overlapping portion 1283 and the side wall 112, so that when the battery swells during charging, the problem of local lithium deposition caused by the electrolyte being squeezed out when the overlapping portion 1283 easily compresses against the side wall 112 is eased.

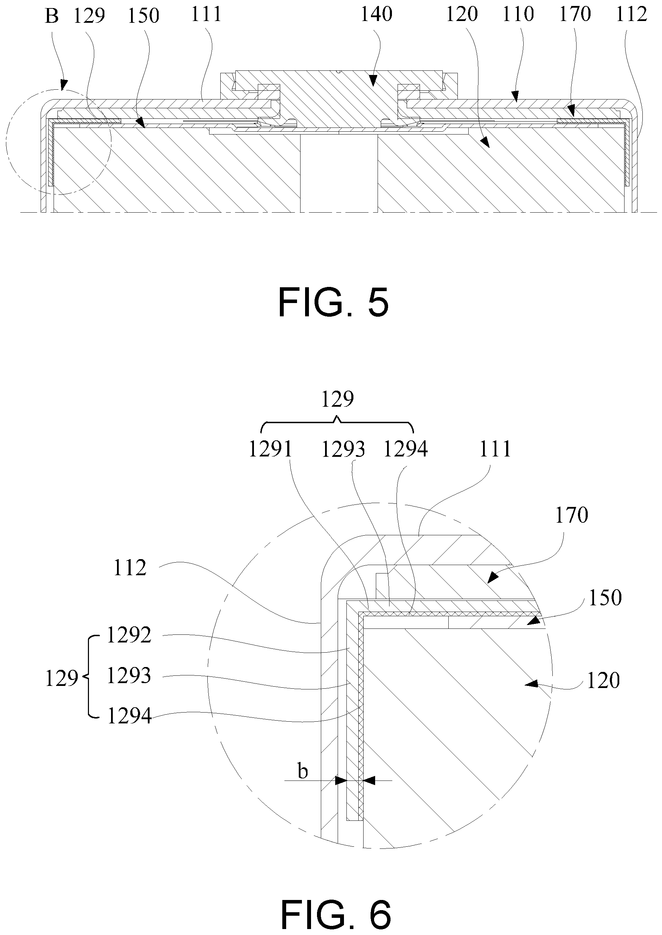

Please refer to FIG. 5, in the secondary battery 100 provided by an embodiment of the disclosure, the secondary battery 100 further includes an electrode terminal 140. Specifically, the electrode terminal 140 passes through the end wall 111 and is insulated from the end wall 111. One end of the electrode terminal 140 facing the electrode assembly 120 passes through the end wall 111 and is electrically connected to the positive tab 125 directly or indirectly. A structural form of the electrode terminal 140 may be any suitable form that can pass through the end wall 111 and be electrically connected to the positive tab 125 of the electrode assembly 120. For instance, a cross section of the electrode terminal 140 may be circular, square, prismatic, or an irregular profile that can achieve stable conduction. A shape of an electrode terminal hole corresponds to that of the electrode terminal 140. In this embodiment, the cross section of the electrode terminal 140 is circular.

Further, refer to FIG. 5 and FIG. 6, in this embodiment, the secondary battery 100 further includes a first current-collecting member 150. One side of the first current-collecting member 150 is fixedly connected to the electrode terminal 140, and the other side of the first current-collecting member 150 is fixedly connected to the positive tab 125. There are multiple ways to connect the first current-collecting member 150 and the positive tab 125, for example, it may be through welding connection or conductive adhesive bonding connection and other methods. As long as electrical connection between the first current-collecting member 150 and the positive tab 125 can be achieved to meet the current guiding requirements. In this embodiment, a welding connection method is adopted, and the first current-collecting member 150 and the electrode terminal 140 are also connected by welding.

Further, in order to provide insulation and isolation between the exposed tab near the outer side of the wound structure 126 and the casing 110, an adhesive-covering layer 129 is arranged at an edge of the first current-collecting member 150 and at an end of the electrode assembly 120 near the first current-collecting member 150. Refer to FIG. 1 and FIG. 5 to FIG. 9, the adhesive-covering layer 129 at least isolates the positive tab 125 and the casing 110. The adhesive-covering layer 129 includes a first covering portion 1291 and a second covering portion 1292 connected to the first covering portion 1291. The first covering portion 1291 and the second covering portion 1292 may be integrally configured or separately configured, which is not limited herein, as long as the first covering portion 1291 covers an edge of a first current-collecting member 150 , and the second covering portion 1292 covers the outer periphery of the end of the electrode assembly 120 near the first current-collecting member 150. On the one hand, the adhesive-covering layer 129 may isolate the positive tab 125 and the casing 110, and on the other hand, wrap the exposed positive tab 125 to protect the positive tab 125, so the risk of the positive tab 125 breaking and falling into the inner portion of the battery and causing a short circuit is lowered.

Refer to FIG. 1 and FIG. 5 to FIG.9 again, further, the second covering portion 1292 includes a compressible elastic layer 1293. On the one hand, the second covering portion 1292 with a certain thickness can serve as a pre-guide when the electrode assembly 120 is placed into the casing 110, so that at least a slit of a thickness of the second covering portion 1292 is provided between the electrode assembly 120 and the side wall 112. In this way, the coaxiality of the electrode assembly 120 and the casing 110 is increased, the problem of uneven stress on the electrode assembly 120 from the casing 110 due to the electrode assembly 120 being eccentric to one side of the casing 110 is improved, the problem of lithium deposition occurring in local poor fluid is improved, and the effect of enhancing safety performance is achieved. Additionally, the second covering portion 1292 has compressible performance, so its thickness when the battery swells is reduced, and the effect of stress concentration is achieved. Preferably, a thickness b of the second covering portion 1292 is in a range of b≤0.2mm, such as 0.1mm, 0.12mm, 0.14mm, 0.15mm, 0.16mm, 0.18mm, or 0.2mm, etc. With the second covering portion 1292 having a thickness within this range, the electrode assembly 120 is pre-guided, and the placement of the electrode assembly 120 into the casing is not affected.

In the secondary battery 100 provided by an embodiment of the disclosure, referring to FIG. 1 and FIG. 5 to FIG. 6, the first covering portion 1291 also includes an elastic layer 1293 integrally formed with the second covering portion 1292. With this arrangement, integrated blanking and packaging of the first covering portion 1291 and the second covering portion 1292 is implemented, so that the process of packaging the adhesive-covering layer 129 may be simplified, and processing efficiency is thus improved. The adhesive-covering layer 129 further includes a first adhesive layer 1294 that adhesively fixes the elastic layer 1293 to the electrode assembly 120 and the first current-collecting member 150. It should be noted that a material of the elastic layer 1293 may be any material that has elasticity and insulation, such as polyethylene foam, ethylene-vinyl acetate copolymer foam, polyurethane foam, or polypropylene foam, etc., which is not limited herein. The first adhesive layer 1294 may be any material that can adhesively fixes the elastic layer 1293 to the electrode assembly 120 and the first current-collecting member 150, such as silicone adhesive, polyurethane adhesive, epoxy resin adhesive, acrylic adhesive, or synthetic rubber adhesive, etc., which is also not limited herein.

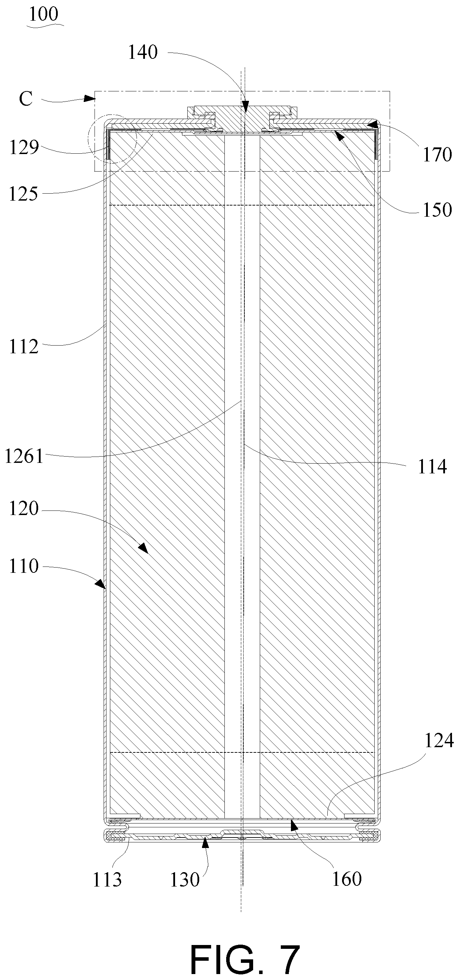

In the secondary battery 100 provided by an embodiment of the disclosure, referring to FIG. 7 to FIG. 9, the second covering portion 1292 includes a base layer 1295 integrally formed with the first covering portion 1291, the elastic layer 1293, and a second adhesive layer 1296 adhering the base layer 1295 to the elastic layer 1293. That is, both the first covering portion 1291 and the second covering portion 1292 include the base layer 1295. In this embodiment, the base layer 1295 is integrally formed, but may also be separately set. The edge of the first current-collecting member 150 is only covered with the base layer 1295, and with this arrangement, a capacity of the secondary battery 100 in the height direction is increased. The elastic layer 1293 is only arranged in the second covering portion 1292, and with this arrangement, improved coaxiality between the electrode assembly 120 and the casing 110 is achieved while lower material costs are needed. It should be noted that a material of the base layer 1295 may be polyimide tape, polytetrafluoroethylene tape or epoxy film tape, etc. The material of the elastic layer 1293 may be any material that has elasticity and insulation, such as polyethylene foam, ethylene-vinyl acetate copolymer foam, polyurethane foam, or polypropylene foam, etc., which is not limited herein. The first adhesive layer 1294 may be any material that can adhesively fixes the elastic layer 1293 to the electrode assembly 120, such as silicone adhesive, polyurethane adhesive, epoxy resin adhesive, acrylic adhesive, or synthetic rubber adhesive, etc., which is also not limited herein.

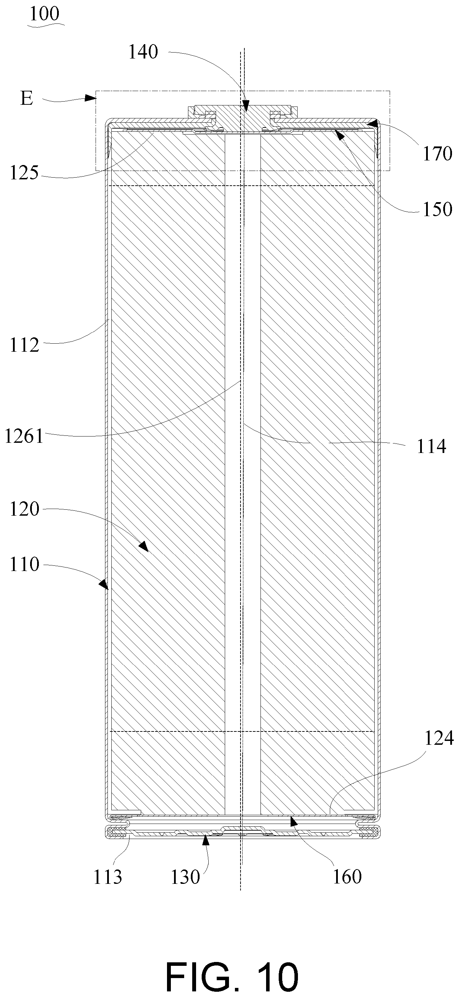

Referring to FIG. 10 to FIG. 12, in the secondary battery 100 provided by an embodiment of the disclosure, the secondary battery 100 further includes insulating plastic 170 at least isolating the positive tab 125 and the casing 110. The insulating plastic 170 may exhibit the effect of isolating and insulating the positive tab 125 and the casing 110. A material of the insulating plastic 170 is not limited and may be any one of perfluoroalkoxy (abbreviate as PFA), polybutylene terephthalate (abbreviate as PBT), liquid crystal polymer (abbreviate as LCP), PP, polyphenylene sulfide (abbreviate as PPS), and polycarbonate (abbreviate as PC). The insulating plastic 170 includes a first insulator 171 and a second insulator 172, and the first insulator 171 is located between the positive tab 125 and the end wall 111. In this embodiment, the positive tab 125 is electrically connected to the electrode terminal 140 through the first current-collecting member 150. Therefore, further, the first insulator 171 is located between the first current-collecting member 150 and the end wall 111 and is configured to isolate the first current-collecting member 150 and the end wall 111. The second insulator 172 is located between the side wall 112 and the electrode assembly 120 and is configured to isolate the exposed positive tab 125 and the side wall 112. Further, the second insulator 172 may also function as a limiter between the electrode assembly 120 and the side wall 112, so that at least a slit of a thickness of the second insulator 172 is provided between the electrode assembly 120 and the side wall 112. In this way, the coaxiality of the electrode assembly 120 and the casing 110 may be increased, the problem of uneven stress on the electrode assembly 120 from the casing 110 due to the electrode assembly 120 being eccentric to one side of the casing 110 is improved, the problem of lithium deposition occurring in local poor fluid is improved, and the effect of enhancing safety performance is achieved.

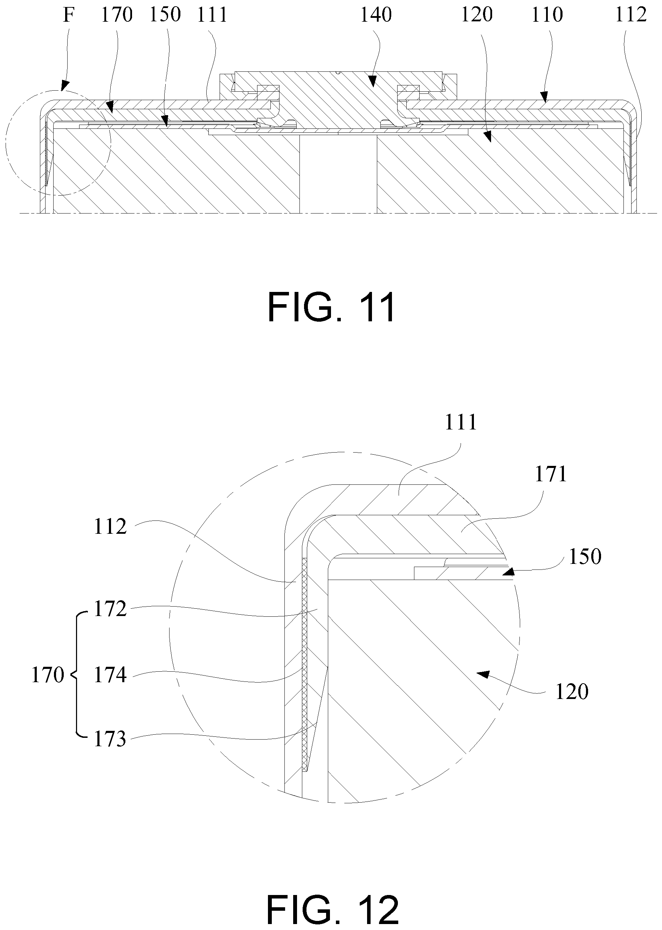

Referring to FIG. 11 and FIG. 12, in the secondary battery 100 provided by an embodiment of the disclosure, a chamfer 173 is arranged on an inner wall of one end of the second insulator 172 away from the first insulator 171. That is, the chamfer 173 is arranged on the side where the electrode assembly 120 is placed into the casing 110. In this arrangement, pre-guiding is provided when the electrode assembly 120 is placed into the casing 110, so assembly efficiency is improved, and a contact area between the electrode assembly 120 and the second insulator 172 is also reduced, which is beneficial for heat dissipation.

Considering that the chamfer 173 of the second insulator 172 is thinner and may easily bend toward the inner portion of the casing 110, thereby interfering with the placement of the electrode assembly 120 into the casing and affecting assembly quality, in the secondary battery 100 provided by an embodiment of the disclosure, referring to FIG. 11 and FIG. 12, a third adhesive layer 174 is arranged on an outer side of the second insulator 172 to adhesively fix the second insulator 172 and the side wall 112. With this arrangement, the second insulator 172 is prevented from interfering with the electrode assembly 120 when it is placed into the casing 110, and a slit is prevented from being provided between the second insulator 172 and the side wall 112. As such, the placement of the electrode assembly 120 into the casing can be easily performed, and the effect of assembly efficiency and assembly quality enhancement is achieved.

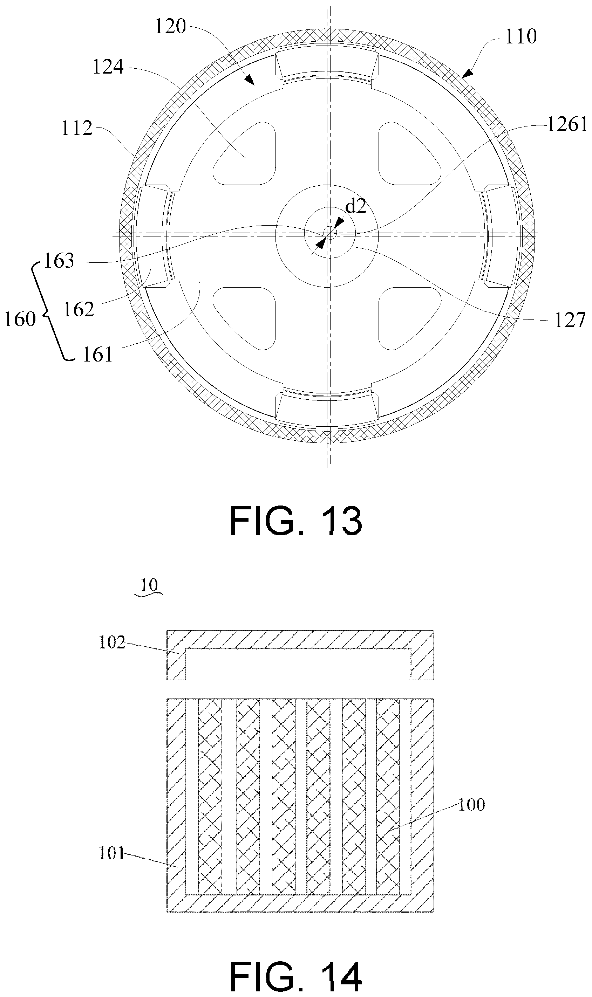

Referring to FIG. 13, in the secondary battery 100 provided by an embodiment of the disclosure, the secondary battery 100 further includes a second current-collecting member 160 including a current-collecting body 161 and a casing-connecting portion 162 arranged at an outer periphery of the current-collecting body 161. The current-collecting body 161 is fixedly connected to the negative tab 124, and the casing-connecting portion 162 is fixedly connected to the side wall 112. The casing-connecting portion 162 may be an integral annular structure, or may be one or more fan-shaped annular structures, as long as it meets the current guiding requirements and welding strength requirements between the second current-collecting member 160 and the casing 110. A radius of an outer edge of the casing-connecting portion 162 is greater than a radius of the electrode assembly 120. An axis of the second current-collecting member 160 is a third axis 163. Since after the casing-connecting portion 162 and the casing 110 are welded, the second current-collecting member 160 may provide a certain limiting effect for the electrode assembly 120, the third axis 163 is located within a cylindrical region with the second axis 1261 as the axis and a diameter d2 of φ0.2mm. In this setting, on the one hand, the coaxiality of the electrode assembly 120 and the second current-collecting member 160 is improved, so that the coaxiality of the electrode assembly 120 and the casing 110 improved. On the other hand, a safety slit is ensured to be provided between a motor assembly and the side wall 112. The problem of uneven stress on the electrode assembly 120 from the casing 110 due to the electrode assembly 120 being eccentric to one side of the casing 110 is improved, the problem of lithium deposition occurring in local poor fluid is improved, and the effect of enhancing safety performance is achieved.

Referring to FIG. 14, the disclosure further provides a battery module 10 including the secondary battery 100 according to any one of the above. In the battery module 10 provided by an embodiment of the disclosure, the battery module 100 includes a box 101, a box cover 102, and a plurality of secondary batteries 100. The plurality of secondary batteries 100 are placed in the box 101 and are connected in series, in parallel, or in a mixed manner of series and parallel. The box cover 102 covers the box 101 to protect the secondary batteries 100. It should be noted that in addition to the secondary battery 100 provided by the disclosure, the battery module 10 may also include a thermal management system of the battery module 10, a circuit board, and other parts. The battery module 10 may be a battery module, a battery pack, an energy storage cabinet, etc., and description thereof is not provided herein.

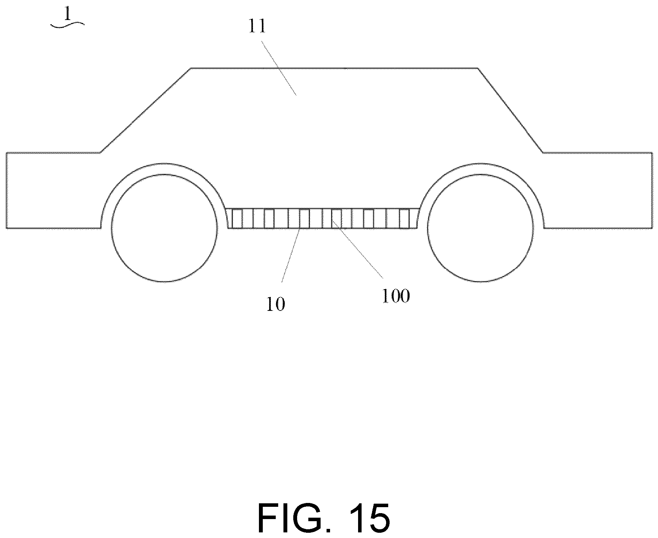

Referring to FIG. 15, the disclosure further provides an electronic apparatus 1 including the aforementioned battery module 10. A working portion 11 is electrically connected to the battery module 10 to obtain power support. As an embodiment, the electronic apparatus 1 is a vehicle. The vehicle may be a fuel vehicle, a gas vehicle, or a new energy vehicle, and the new energy vehicle may be a pure electric vehicle, a hybrid vehicle, or a range-extended vehicle, etc., which is not limited herein. The working portion 11 is a vehicle body, and the battery module 10 is arranged at the bottom of the vehicle body and provides electrical energy support for the driving of the vehicle or the operation of electrical components in the vehicle. However, in other embodiments, the electronic apparatus 1 may be a mobile phone, a portable apparatus, a notebook computer, a ship, a spacecraft, an electric toy, an electric tool, etc. The spacecraft includes but not limited to an airplane, a rocket, a space shuttle, a spaceship, etc. The working portion 11 may be a unit component capable of obtaining the electric energy of the battery module 10 and performing corresponding work, such as a blade rotating unit of a fan, a dust collection working unit of a vacuum cleaner, etc. The electric toy includes but not limited to a stationary or mobile electric toy, for example, a game machine, an electric car toy, an electric boat toy, an electric airplane toy, etc. The electric tool includes a metal cutting electric tool, a grinding electric tool, an assembling electric tool, and an electric tool for railway use, such as an electric drill, an electric grinder, an electric wrench, an electric screwdriver, an electric hammer, an impact drill, a concrete vibrator, an electric planer, etc. The above electronic apparatus 1 is not particularly limited in the embodiments of the disclosure.

In the secondary battery of the disclosure, the axis of the casing is the first axis, and the axis of the winding hole in the electrode assembly is the second axis. When the SOC of the secondary battery is less than 5%, the second axis is limited to be located in a cylindrical region with the first axis as the axis and a diameter d1 of φ0.6mm. In this setting, the coaxiality of the electrode assembly and the casing is increased, the problem of uneven stress on the electrode assembly from the casing due to the electrode assembly being eccentric to one side of the casing is improved, the problem of lithium deposition occurring in local poor fluid is improved, and the effect of enhancing safety performance is achieved. Therefore, some practical problems in the related art are effectively overcome, so that the disclosure exhibits high utilization value and use significance.

## Claims

1. A secondary battery (100), **characterized in that** the secondary battery (100) comprising:
a casing (110) comprising an end wall (111) and a side wall (112) surrounding the end wall (111), wherein an axis of the casing (110) is a first axis (114); and
an electrode assembly (120) accommodated in the casing (110) and comprising a positive terminal sheet (121), a negative terminal sheet (123), and a separator (122) stacked and wound to form a wound structure (126), wherein a number of turns of the negative terminal sheet (123) is greater than 40 turns, and an axis of the wound structure (126) is a second axis (1261),
wherein when a state of charge (SOC) of the secondary battery (100) is less than 5%, the second axis (1261) is located in a cylindrical region with the first axis (114) as the axis and a diameter d1 of φ0.6mm.

2. The secondary battery (100) according to claim 1, wherein the electrode assembly (120) further comprises a finishing adhesive (128) wound around an outer periphery of the wound structure (126) for more than one turn, in a winding direction of the wound structure (126), a terminating end (1282) of the finishing adhesive (128) passes over a starting end (1281) of the finishing adhesive (128) and forms an overlapping portion (1283), and a distance between the overlapping portion (1283) and the side wall (112) is greater than or equal to 0.2mm.

3. The secondary battery (100) according to claim 1 or 2, further comprising an electrode terminal (140), a first current-collecting member (150), and an adhesive-covering layer (129), the electrode terminal (140) passes through the end wall (111) and is insulated from the end wall (111), an end portion of the positive terminal sheet (121) comprises a positive tab (125) bent toward the second axis (1261), one side of the first current-collecting member (150) is fixedly connected to the electrode terminal (140), the other side of the first current-collecting member (150) is fixedly connected to the positive tab (125), the adhesive-covering layer (129) at least isolates the positive tab (125) and the casing (110) and comprises a first covering portion (1291) and a second covering portion (1292) connected to the first covering portion (1291), the first covering portion (1291) covers an edge of a first current-collecting member (150), the second covering portion (1292) covers an outer periphery of one end of the electrode assembly (120) close to the first current-collecting member (150) and comprises a compressible elastic layer (1293), and a thickness b of the second covering portion (1292) is in a range of b≤0.2mm.

4. The secondary battery (100) according to any one of claims 1 to 3, wherein the first covering portion (1291) also includes the elastic layer (1293) and is integrally formed with the second covering portion (1292), and the adhesive-covering layer (129) further comprises a first adhesive layer (1294) that adhesively fixes the elastic layer (1293) to the electrode assembly (120) and the first current-collecting member (150).

5. The secondary battery (100) according to any one of claims 1 to 4, wherein the second covering portion (1292) comprises a base layer (1295) integrally formed with the first covering portion (1291), the elastic layer (1293), and a second adhesive layer (1296) adhering the base layer (1295) to the elastic layer (1293).

6. The secondary battery (100) according to any one of claims 1 to 5, wherein an end portion of the positive terminal sheet (121) comprises a positive tab (125) extending out of the separator (122) along the second axis (1261) in a direction toward the end wall (111) and bent toward the second axis (1261), the secondary battery (100) further comprises an insulating plastic (170) at least isolating the positive tab (125) and the casing (110), the insulating plastic (170) comprises a first insulator (171) and a second insulator (172), the first insulator (171) is located between the positive tab (125) and the end wall (111), and the second insulator (172) is located between the side wall (112) and the electrode assembly (120).

7. The secondary battery (100) according to any one of claims 1 to 6, wherein a chamfer (173) is arranged on an inner wall of one end of the second insulator (172) away from the first insulator (171).

8. The secondary battery (100) according to any one of claims 1 to 7, wherein a third adhesive layer (174) is arranged on an outer side of the second insulator (172) to adhesively fix the second insulator (172) and the side wall (112).

9. The secondary battery (100) according to any one of claims 1 to 8, wherein an end portion of the negative terminal sheet (123) comprises a negative tab (124) extending out of the separator (122) along the second axis (1261) in a direction away from the end wall (111) and bent toward the second axis (1261), the secondary battery (100) further comprises a second current-collecting member (160) comprising a current-collecting body (161) and a casing-connecting portion (162) arranged at an outer periphery of the current-collecting body (161), the current-collecting body (161) is fixedly connected to the negative tab (124), the casing-connecting portion (162) is fixedly connected to the side wall (112), a radius of an outer edge of the casing-connecting portion (162) is greater than a radius of the electrode assembly (120), and an axis of the second current-collecting member (160) is a third axis (163) located within a cylindrical region with the second axis (1261) as the axis and a diameter d2 of φ0.2mm.

10. A battery module (10), **characterized in that** the battery module (10) comprising the secondary battery (100) according to any one of claims 1 to 9.

11. An electronic apparatus (1), **characterized in that** the electronic apparatus (1) comprising the battery module (10) according to claim 10.
